# EUROPEAN PATENT APPLICATION

(11) **EP 4 553 954 A1**
(43) Date of publication of application: **14.05.2025**
(21) Application number: 24192170.9
(22) Date of filing: 31.07.2024
(51) Int. Cl.: H01M 10/613, H01M 10/617, H01M 10/625, H01M 10/6551, H01M 10/6555, H01M 10/6557, H01M 10/6562, H01M 50/209, H01M 50/474, H01M 50/477, H01M 10/6567, H01M 10/6569

(54) **BATTERY, BATTERY MODULE, AND ELECTRICAL DEVICE**

(30) Priority: 09.11.2023 CN 202323047565 U; 09.11.2023 CN 202323066244 U; 09.11.2023 CN 202311494241; 17.01.2024 WO PCT/CN2024/072743
(71) Applicant: Eve Power Co., Ltd., Jingmen, Hubei 448000 (CN)
(72) Inventor: FANG, Hua, Jingmen, Hubei, 448000 (CN); CHE, Liyuan, Jingmen, Hubei, 448000 (CN); CHEN, Xianyang, Jingmen, Hubei, 448000 (CN); GUO, Jiahao, Jingmen, Hubei, 448000 (CN); ZHAO, Hongwan, Jingmen, Hubei, 448000 (CN); YUAN, Dingding, Jingmen, Hubei, 448000 (CN); SUN, Fei, Jingmen, Hubei, 448000 (CN); CHENG, Cheng, Jingmen, Hubei, 448000 (CN); TAN, Mingsheng, Jingmen, Hubei, 448000 (CN)
(74) Representative: Murgitroyd & Company

(57) **Abstract**

A battery (1), a battery module (1000), and an electrical device are provided. The battery (1) includes a housing (10), an electrode assembly group (20), and a heat conductive member (30). The housing (10) includes a base plate (11) and an accommodating cavity (12). The electrode assembly group (20) includes a plurality of electrode assemblies (21) arranged in a first direction. The heat conductive member (30) includes a base support part (31) and a heat conductive part (32) connected together. The base support part (31) is in thermally conductive contact with the base plate (11). At least part of the base support part (31) is disposed between adjacent two of the electrode assemblies (21). The heat conductive part (32) is in thermally conductive contact with sidewalls of the two adjacent electrode assemblies (21) located at two opposite sides of the heat conductive part (32).

## Description

### TECHNICAL FIELD

The present application relates to the field of power battery technologies, and, more particularly, to a battery, a battery module, and an electrical device.

### BACKGROUND

Lithium batteries are widely used in industries such as automobiles and electronic products due to advantages of small sizes, high energy density, long service life, and environmental friendliness. Currently, in the related art, a preparation method of the lithium battery includes following steps: welding two electrode assemblies on a top cover respectively; combining the two electrode assemblies together; attaching an inner protective film on an outer surface of the two electrode assemblies; providing a base support part on a lower surface of the two electrode assemblies to prevent short circuits caused by heat conductive contact between jelly rolls and an aluminum housing; placing the two electrode assemblies into the aluminum housing for welding; and injecting electrolyte into the aluminum housing.

In the related art, since the lithium battery generates heat during high-power charging and discharging processes, and a gap between two adjacent electrode assemblies in the lithium battery is small, the heat dissipation at the gap between the two adjacent electrode assemblies is poor. When the lithium battery generates heat continuously during use, a large amount of heat accumulates between the two adjacent electrode assemblies, which affects the use of the lithium battery itself and surrounding electronic components, and reduces a service life of the lithium battery.

### SUMMARY

A battery, a battery module, and an electrical device are provided to solve a problem that a large amount of heat accumulates between two adjacent electrode assemblies, which affects the use of a lithium battery itself and surrounding electronic components, and reduces a service life of the lithium battery.

In a first aspect, a battery is provided by the embodiments of the present application. The battery includes a housing, an electrode assembly group, and a heat conductive member. The housing includes a base plate and an accommodating cavity. The electrode assembly group is disposed inside the accommodating cavity and includes a plurality of electrode assemblies arranged in a first direction. The heat conductive member is disposed inside the accommodating cavity. The heat conductive member includes a base support part and a heat conductive part connected together. The base support part is in thermally conductive contact with the base plate. At least part of the base support part is disposed between two adjacent electrode assemblies. The heat conductive part is in thermally conductive contact with sidewalls of the two adjacent electrode assemblies located at two opposite sides of the heat conductive part.

In a second aspect, a battery module is provided by the embodiments of the present application and includes the battery mentioned above.

In a third aspect, an electrical device is provided by the embodiments of the present application and includes the battery module mentioned above.

The beneficial effects of the present application are illustrated below. A battery, a battery module, and an electrical device are provided by the embodiments of the present application. The battery includes a housing, an electrode assembly group, and a heat conductive member. The housing includes a base plate and an accommodating cavity. The electrode assembly group is disposed inside the accommodating cavity and includes a plurality of electrode assemblies arranged in a first direction. The heat conductive member is disposed inside the accommodating cavity. The heat conductive member includes a base support part and a heat conductive part connected together. The base support part is in thermally conductive contact with the base plate. At least part of the base support part is disposed between two adjacent electrode assemblies. The heat conductive part is in thermally conductive contact with sidewalls of the two adjacent electrode assemblies located at two opposite sides of the heat conductive part. During high-power charging and discharging processes of the battery, heat generated between the two adjacent electrode assemblies can be quickly conducted to the housing through the heat conductive member. This avoids a situation that a large amount of heat is accumulated between the two adjacent electrode assemblies, thus accelerating a heat dissipation rate of the electrode assemblies, prolonging a service life of the battery, and improving the safety performance of the battery.

The battery module provided by the present application adopts the battery mentioned above, which accelerates the heat dissipation rate of the electrode assemblies, prolongs the service life of the battery, and improve the safety performance of the battery. In this way, the safety performance of the battery module is also improved. Moreover, the battery module has characteristics such as a low production cost and easy assembly.

The electrical device provided by the present application adopts the battery module mentioned above, which accelerates the heat dissipation rate of the electrode assemblies and improves the service life and the safety performance of the battery. The electrical device has characteristics such as a low production cost and easy assembly. Moreover, an overall structure of the electrical device may be simplified.

### BRIEF DESCRIPTION OF THE DRAWINGS

FIG. 1 is a first three-dimensional schematic structural diagram of a battery provided by an embodiment of the present application.
FIG. 2 is an enlarged view at a position A shown in FIG. 1.
FIG. 3 is a first schematic structural diagram of a heat conductive member provided by an embodiment of the present application.
FIG. 4 is a first side view of the heat conductive member provided by an embodiment of the present application.
FIG. 5 is a second schematic structural diagram of the heat conductive member provided by an embodiment of the present application.
FIG. 6 is a second side view of the heat conductive member provided by an embodiment of the present application.
FIG. 7 is a third schematic structural diagram of the heat conductive member provided by an embodiment of the present application.
FIG. 8 is a cross-sectional schematic diagram of the heat conductive member provided by an embodiment of the present application.
FIG. 9 is a third side view of the heat conductive member provided by an embodiment of the present application.
FIG. 10 is a second three-dimensional schematic structural diagram of the battery provided by an embodiment of the present application.
FIG. 11 is a fourth schematic structural diagram of the heat conductive member provided by an embodiment of the present application.
FIG. 12 is a fourth side view of the heat conductive member provided by an embodiment of the present application.
FIG. 13 is an exploded schematic structural diagram of a battery provided by an embodiment of the present application.
FIG. 14 is a schematic structural diagram of a battery module provided by an embodiment of the present application.

### Reference numerals:

1000, battery module; 100, battery assembly; 200, cooling plate; 1, battery; 10, housing; 20, electrode assembly group; 30, heat conductive member; 11, base plate; 12, accommodating cavity; 13, cover plate assembly; 14, opening; 15, lower housing; 21, electrode assembly; 21A, first electrode assembly; 21B, second electrode assembly; 30A, insulating heat conductive member; 30B, vapor chamber; 31, base support part; 32, heat conductive part; 320, heat conductive sub-part; 323, first through hole; 324, heat conductive cavity; 33, first roof part; 331, third through hole; 32A, first heat conductive sub-part; 32B, second heat conductive sub-part; 321, first outer housing; 321A, wick; 321A1, capillary structure; 3211, first frame; 322, second outer housing; 322A, support structure; 322A1, protrusion; 3211, second frame; 320A, cavity; 40, insulating layer; 311, first convex part; 312, second convex part; 313, second through hole; 32A1, first side surface; 32A2, second side surface; 32B1, third side surface; 32B, fourth side surface; X, first direction; Y, second direction.

### DETAILED DESCRIPTION

In the present application, unless otherwise specified and defined, terms "connect" , "contact" and "fix" should be understood in a broad sense. For example, it may be a fixed connection, a detachable connection, or made as a whole. It may be a mechanical connection or an electrical connection. It may be a direct or indirect connection through an intermediate media. It may be an internal connection between two components or an interaction relationship between two components. For those skilled in the art, meanings of the above terms in the present application can be understood according to situations.

In the present application, unless otherwise specified and defined, a first feature is disposed "on" or "under" a second feature may include a direct contact between the first feature and the second feature, or a contact between the first feature and the second feature through other features rather than the direct contact. Moreover, that the first feature is disposed "above" or "up" the second feature includes that the first feature is directly above or obliquely above the second feature, or only indicate that a horizontal height of the first feature is greater than a horizontal height of the second feature. That the first feature is disposed "below" , "under" , or "underneath" of the second feature includes that the first feature is directly below or obliquely below the second feature, or only indicates that the horizontal height of the first feature is less than the horizontal height of the second feature.

In description of the present application, it should be understood that orientational or positional relationships represented by directional terms mentioned in the present application, such as terms "up", "down", "right", etc., are orientational or positional relationships based on the drawings, and are merely for the convenience of describing the present disclosure and simplifying the description, rather than indicating or implying that the device or element is intended to have a particular orientation, or is constructed and operated in a particular orientation, and therefore, should not be interpreted as a limitation of the application. The terms "first" and "second" are used only to distinguish in description and have no special meaning.

A battery, a battery module, and an electrical device are provided by the embodiments of the present application. It should be noted that the description order of the following embodiments is not intended as a limitation of the preferred order of the embodiments.

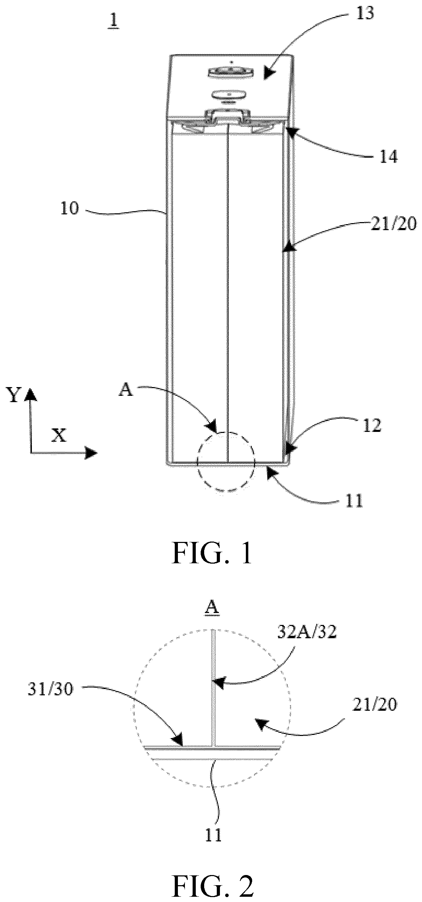

Referring to FIG. 1 to FIG. 6, an electrode sheet 1 is provided by the embodiments of the present application. The battery 1 includes a housing 10, an electrode assembly group 20, and a heat conductive member 30. The housing 10 includes a base plate 11 and an accommodating cavity 12. The electrode assembly group 20 is disposed inside the accommodating cavity 12 and includes a plurality of electrode assemblies 21 arranged in a first direction X. The heat conductive member 30 is disposed inside the accommodating cavity 12. The heat conductive member 30 includes a base support part 31 and a heat conductive part 32 connected together. The base support part 31 is in thermally conductive contact with the base plate 11. At least part of the base support part 32 is disposed between two adjacent electrode assemblies 21. The heat conductive part 32 is in thermally conductive contact with sidewalls of the two adjacent electrode assemblies 21 located at two opposite sides of the heat conductive part 32.

It should be noted that in the related art, since a lithium battery generates heat during high-power charging and discharging processes, and a gap between two adjacent electrode assemblies in the lithium battery is small, the heat dissipation at the gap between the two adjacent electrode assemblies is poor. When the lithium battery generates heat continuously during use, a large amount of heat accumulates between the two adjacent electrode assemblies, which can easily lead to serious safety problems such as explosion of the lithium battery and causing fire.

It may be understood that in the embodiments of the present application, the heat conductive member is disposed inside the accommodating cavity and includes the base support part and the heat conductive part connected together. The base support part is disposed between the base plate and the electrode assemblies, and the base support part is in thermally conductive contact with the base plate. At least part of the base support part is disposed between the two adjacent electrode assemblies. The heat conductive part is in thermally conductive contact with the sidewalls of the two adjacent electrode assemblies located at the two opposite sides of the heat conductive part. During the high-power charging and discharging processes of the battery, the heat generated between the two adjacent electrode assemblies can be quickly conducted to the housing through the heat conductive member. That avoids a situation that a large amount of heat is accumulated between the two adjacent electrode assemblies, thus accelerating a heat dissipation rate of the electrode assemblies, prolonging a service life of the battery, and improving the safety performance of the battery.

Technical solutions of the present application are now described in conjunction with specific embodiments.

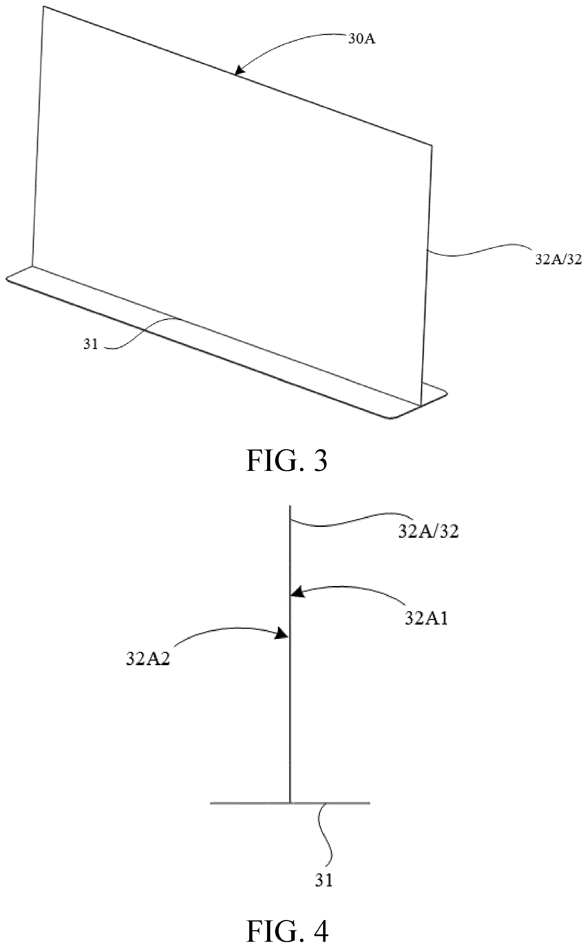

In one embodiment, referring to FIG. 1, FIG. 2, FIG. 3, and FIG. 4. FIG. 1 is a first three-dimensional schematic structural diagram of a battery provided by an embodiment of the present application. FIG. 2 is an enlarged view at a position A shown in FIG. 1. FIG. 3 is a first schematic structural diagram of a heat conductive member provided by an embodiment of the present application. FIG. 4 is a first side view of the heat conductive member provided by an embodiment of the present application.

This embodiment provides a battery 1 including a housing 10, an electrode assembly group 20, and a heat conductive member 30. The housing 10 includes a cover plate assembly 13, opening 14, an accommodating cavity 12, and a base plate 11. The cover plate assembly 13 is configured to seal the opening 14 of the housing 10. The cover plate assembly 13 and the base plate 11 are arranged at two opposite sides of the accommodating cavity 12. The housing 10 is made of aluminum having characteristics of light weight, high strength, and fast thermal conductivity. The heat conductive member 30 has characteristics such as insulation and thermal conductivity.

The cover plate assembly 13 includes, but is not limited to, conventional components such as an upper plastic part, a top cover, a lower plastic part, a sealing ring of the lower plastic part, positive and negative pole posts, an explosion-proof valve, a liquid injection hole, and positive and negative pole terminals. A specific structure and setting method of the cover plate component 13 in this embodiment will not be described in detail herein.

The electrode assembly group 20 is disposed inside the accommodating cavity 12 and includes a plurality of electrode assemblies 21 arranged in a first direction X. The heat conductive member 30 is disposed inside the accommodating cavity 12. The heat conductive member 30 includes a base support part 31 and a heat conductive part 32 connected together. The base support part 31 is disposed between the base plate 11 and the electrode assemblies 21. The base support part 31 is in thermally conductive contact with the base plate 11. At least part of the heat conductive part 32 is disposed between two adjacent electrode assemblies 21. The heat conductive part 32 is in thermally conductive contact with sidewalls of the two adjacent electrode assemblies 21 located two opposite sides of the heat conductive part 32, so that heat generated by the two adjacent electrode assemblies 21 can be quickly conducted to the base plate 11 through the heat conductive part 32. This avoids a situation in the related art that a large amount of heat is accumulated between the two adjacent electrode assemblies 21.

Referring to FIG. 4, it should be noted that in this embodiment, the technical solutions of the present application are illustrated by taking the first direction as the X direction and the electrode assembly group 20 including two electrode assemblies 21 arranged along the first direction X as examples. Moreover, the heat conductive part 32 may be in direct contact with the sidewalls of the two adjacent electrode assemblies 21 located at the opposite sides of the heat conductive part 32. A heat conductive layer may be provided between the heat conductive part 32 and the sidewalls of the two adjacent electrode assemblies 21 located at the two opposite sides of the heat conductive part 32. One side surface of the heat conductive layer is in contact with the heat conductive part 32, and another side surface of the heat conductive layer is in contact with the sidewalls of the electrode assemblies 21. This embodiment does not specifically limit a way in which the heat conductive part 32 is in thermally conductive contact with the two adjacent electrode assemblies 21 located at the two opposite sides of the heat conductive part 32.

In one embodiment, the heat conductive member 30 is an insulating heat conductive member 30A integrally formed. The heat conductive member 30 is made of, but is not limited to, materials having excellent thermal conductivity and insulation. Specifically, the insulating heat conductive member 30A is made of biphenyl tetracarboxylic diandhydride, diphenyl ether diamine, or m-phenylenediamine, so that the insulating heat conductive member 30A can have excellent thermal conductivity. Moreover, the insulating heat conductive member 30A can play a role of insulation protection to improve the safety performance of the battery 1.

One side of the base support part 31 is in thermally conductive contact with the base plate 11, and an insulating layer 40 is provided between another side of the base support part 31 and a side of the electrode assembly group 20 adjacent to the base plate 11. An orthographic projection of the base support part 31 on the base plate 11 covers an orthographic projection of the electrode assembly group 20 on the base plate 11. The heat conductive part 32 extends from the base support part 31 toward a direction away from the base plate 11. The heat conductive part 32 is disposed perpendicular to the base support part 31. It should be understood that in this embodiment, the heat conductive part 32 and the base support part 31 are integrally formed, so that there is no need to additionally provide one heat conductive part 32, thereby reducing a production cost, saving processes, ensuring a stability of the heat conductive member 30, and improving a production efficiency of the heat conductive member 30.

In one embodiment, the heat conductive part 32 includes a first heat conductive sub-part 32A located between the two adjacent electrode assemblies 21. The first heat conductive sub-part 32A includes a first side surface 32A1 and a second side surface 32A2 opposite to the first side surface 32A1. For the two adjacent electrode assemblies 21 located at the two opposite sides of the first heat conductive sub-part 32A, the first side surface 32A1 is in thermally conductive contact with one sidewall of one of the adjacent two electrode assemblies 21, and the second side surface 32A2 is in thermally conductive contact with one sidewall of the other one of the two adjacent electrode assemblies 21.

It should be understood that in this embodiment, the first heat conductive sub-part 32A is located between the two adjacent electrode assemblies 21. The first side surface 32A1 is in thermally conductive contact with one sidewall of one of the two adjacent electrode assemblies 21, and the second side surface 32A2 is in thermally conductive contact with one sidewall of the other one of the two adjacent electrode assemblies 21, so as to balance the temperature between the two adjacent electrode assemblies 21. Moreover, during charging and discharging processes of the battery 1, heat generated between the two adjacent electrode assemblies 21 can be quickly conducted to the base plate 11 through the first heat conductive sub-part 32A and the base support part 31, and the heat accumulated between the two adjacent electrode assemblies 21 can be dissipated through the base plate 11. This avoids a situation in the related art that a large amount of heat is accumulated between the two adjacent electrode assemblies 21, thus accelerating a heat dissipation rate of the electrode assemblies 21, prolonging a service life of the battery 1, and improving the safety performance of the battery 1.

In one embodiment, in the first direction X, an orthographic projection of the first heat conductive sub-part 32A on a sidewall of the housing 10 covers an orthographic projection of the electrode assemblies 21 on the sidewall of the housing 10 to increase a contact area between the first heat conductive sub-part 32A and the electrode assemblies 21, so that the heat accumulated between the two adjacent electrode assemblies 21 can be well conducted from the first heat conductive sub-part 32A to the base support part 31, and then conducted from the base support part 31 to the base plate 11, thereby effectively improving the heat dissipation effect of the heat conductive member 30 on the electrode assemblies 21.

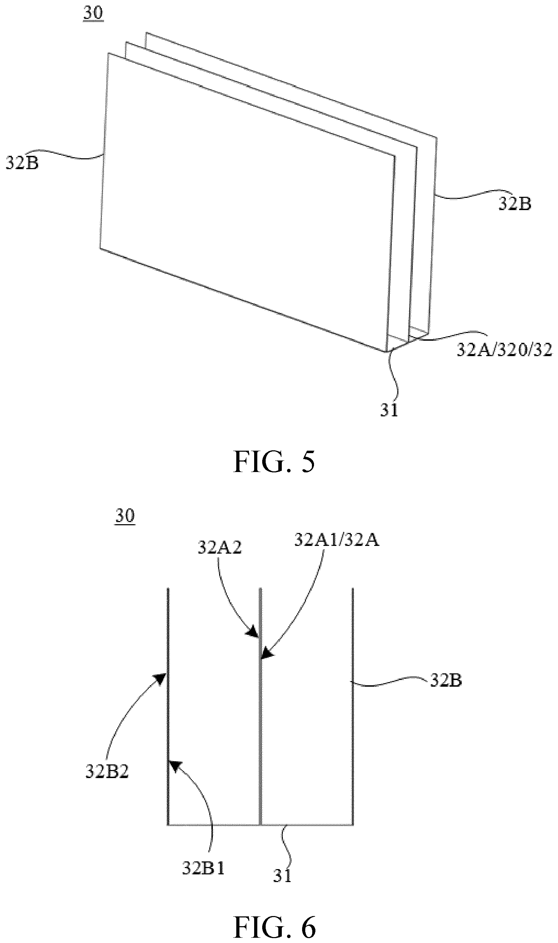

Referring to FIG. 5 and FIG. 6, FIG. 5 is a second schematic structural diagram of the heat conductive member provided by an embodiment of the present application. FIG. 6 is a second side view of the heat conductive member provided by an embodiment of the present application.

In this embodiment, a structure of the heat conductive part is similar/identical to the structure of the heat conductive part provided by the embodiments mentioned above. Please refer to the descriptions of the heat conductive part in the embodiments mentioned above for details, which will not be described herein.

The heat conductive part 32 includes a plurality of heat conductive sub-parts 320. In the first direction X, two side surfaces of at least one of the heat conductive sub-parts 320 are in contact with the housing 10 and the electrode assemblies 21, respectively, so that the heat generated by the two adjacent electrode assemblies 21 can be quickly conducted to the base plate 11 through the heat conductive part 32. This avoids the situation in the related art that a large amount of heat is accumulated between the two adjacent electrode assemblies, thus accelerating the heat dissipation rate of the electrode assemblies 21, prolonging the service life of the battery 1, and improving the safety performance of the battery 1.

Specifically, the heat conductive part 32 includes a first heat conductive sub-part 32A and a second heat conductive sub-part 32B arranged at intervals in the first direction X. The first heat conductive sub-part 32A is located between the two adjacent electrode assemblies 21. The second heat conductive sub-part 32B is located between one of the electrode assemblies 21 and the housing 10. The second heat conductive sub-part 32B includes a third side surface 32B1 and a fourth side surface 32B2 opposite to the third side surface 32B1. The third side surface 32B1 is in thermally conductive contact with one sidewall of one of the electrode assemblies 21, and the fourth side surface 32B2 is in thermally conductive contact with one sidewall of the housing 10.

It should be noted that in this embodiment, the technical solutions of the present application are illustrated by taking an example of the heat conductive part 32 including one first heat conductive sub-part 32A and two second heat conductive sub-parts 32B.

It should be understood that in this embodiment, the two second heat conductive sub-parts 32B each includes the third side surface 32B1 and the fourth side surface 32B2 opposite to the third side surface 32B1. The third side surface 32B1 is in thermally conductive contact with one sidewall of one of the electrode assemblies 21, and the fourth side surface 32B2 is in thermally conductive contact with one sidewall of the housing 10. During the charging and discharging processes of the battery 1, the heat generated by the electrode assemblies 21 can be quickly conducted to sidewalls of the housing 10 through the two second heat conductive sub-parts 32B and conducted to the base support part 31, and then conducted to the base plate 11 through the base support part 31. This avoids the situation that a large amount of heat is accumulated on the electrode assemblies 21, thus accelerating the heat dissipation rate of the electrode assemblies 21, prolonging the service life of the battery 1, and improving the safety performance of the battery 1.

In one embodiment, in the first direction X, an orthographic projection of each of the second heat conductive sub-parts 32B on the sidewall of the housing 10 covers the orthographic projection of each of the electrode assemblies 21 on the sidewall of the housing 10 to increase a contact area between the second heat conductive sub-parts 32B and the electrode assemblies 21, so that the heat can be well conducted from the second heat conductive sub-parts 32B to the sidewalls of the housing 10, thereby effectively improving the heat dissipation effect of the second heat conductive sub-parts 32B on the electrode assemblies 21.

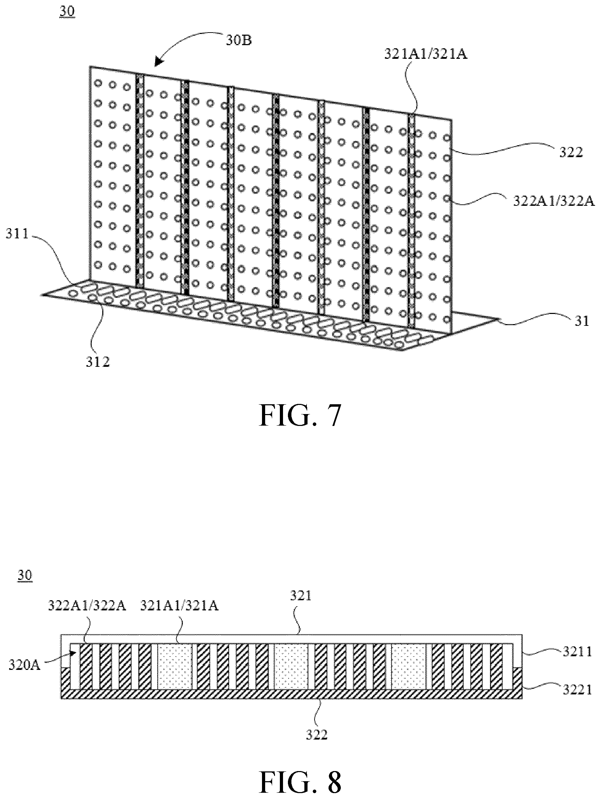

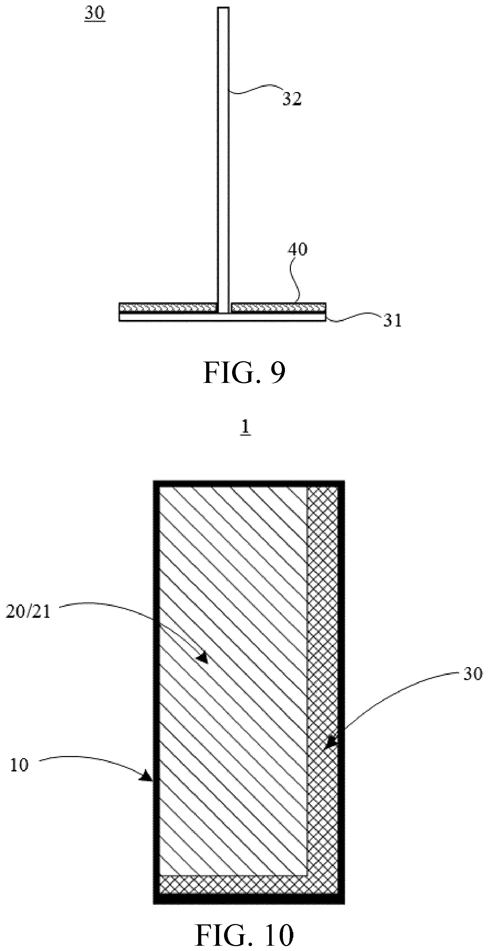

Referring to FIG. 7, FIG. 8, and FIG. 9, FIG. 7 is a third schematic structural diagram of the heat conductive member provided by an embodiment of the present application. FIG. 8 is a cross-sectional schematic diagram of the heat conductive member provided by an embodiment of the present application. FIG. 9 is a third side view of the heat conductive member provided by an embodiment of the present application.

In this embodiment, at least part of the heat conductive member 30 is a vapor chamber 30B. The heat conductive part 32 includes a first housing 321, a second housing 322, and a cavity 320A surrounded by the first housing 321 and the second housing 322. At least one of the first housing 321 and the second housing 322 is provided with a wick 321A. The cavity 320A is provided with a heat conductive material. The wick 321A is communicated to the cavity 320A to conduct the heat conductive material.

In one embodiment, an outer surface of the vapor chamber 30B is provided with an insulating film. The insulating film may be formed on the outer surface of the vapor chamber 30B by insulating spraying. It may be understood that the insulating film is provided on the entire outer surface of the vapor chamber 30B, so that the heat conductive member 30 is insulated from a side of the electrode assemblies 21 adjacent to the heat conductive member 30, thereby ensuring the reliability of the insulation between the electrode assemblies 21 and the heat conductive member 30 and further ensuring the heat dissipation effect between the electrode assemblies 21 and the heat conductive member 30.

In one embodiment, the outer surface of the vapor chamber 30B is provided with a plating layer. The plating film may be formed on the outer surface of the vapor chamber 30B by spraying or electroplating. It may be understood that the rust resistance of the heat conductive member 30 can be enhanced by spraying or electroplating stainless steel on the outer surface of the vapor chamber 30B.

Specifically, both the first housing 321 and the second housing 322 are made of, but are not limited to, one or more combinations of copper, copper alloy, aluminum, aluminum alloy, stainless steel, or other metals and alloys thereof. A periphery of the first housing 321 is provided with a first frame 3211, and a periphery of the second housing 322 is provided with a second frame 3221. The first frame 3211 and the second frame 3221 can be joined together by welding.

The wick 321A is provided with a capillary structure 321A1 configured to directionally conduct the heat conductive material. The capillary structure 321A1 includes, but is not limited to, any one of a capillary mesh, a capillary layer, a metal foam, and a porous polymer film. In this embodiment, the technical solutions of the present application are illustrated by taking the first housing 321 being provided with the wick 321A as an example. The capillary structure 321A1 can be bonded to an inner wall of the first housing 321 by hot-melt bonding which has a low processing cost. Moreover, the capillary structure 321A1 and the first housing 321 can be tightly bonded to avoid a gap between the capillary structure 321A1 and the first housing 321, which results in the accumulation of gaseous media and affects the soaking effect. It may be understood that the hot-melt bonding is only for illustrative purposes, and this embodiment does not specifically limit a connecting way between the capillary structure 321A1 and the first housing 321.

In one embodiment, the at least one of the first housing 321 and the second housing 322 is provided with a support structure 322A abutting against the two adjacent electrode assemblies 21. The wick 321A and the support structure 322A are arranged at intervals in a second direction Y, and the second direction Y is an extending direction of the heat conductive member 30. The technical solutions in this embodiment are illustrated by taking the second housing 322 being provided with the support structure 322A as an example.

The support structure 322A is provided with a plurality of protrusions 322A1 arranged at intervals. The plurality of protrusions 322A1 are formed by the second housing 322 extending toward a direction close to the first housing 321. The plurality of protrusions 322A1 abut against the inner wall of the first housing 321.

The plurality of protrusions 322A1 and the second housing 322 are integrally formed, so that there is no need to additionally provide one support structure 322A, thereby reducing the production cost and saving processes. The protrusions 322A1 may be formed by etching and stamping the second housing 322. The protrusions 322A1 are located between the second housing 322 and the first housing 321 to form a cavity 320A between the second housing 322 and the first housing 321. The cavity 320A is in a vacuum or near-vacuum state. The cavity 320A is provided with the heat conductive material. A heat dissipation channel configured to conduct liquid or gaseous cooling materials can be formed by the cavity 320A and the plurality of protrusions 322A1.

In one embodiment, one side of the base support part 31 is in thermally conductive contact with the base plate 11, and an insulating layer 40 is provided between another side of the base support part 31 and the side of the electrode assembly group 20 adjacent to the base plate 11. An orthographic projection of the base support part 31 on the base plate 11 covers an orthographic projection of the electrode assembly group 20 on the base plate 11. An orthographic projection of the insulating layer 40 on the base plate 32 covers the orthographic projection of the base support part 31 on the base plate 32, so that the base support part 31 is insulated from a side of the electrode assemblies 21 adjacent to the base plate 11.

The base support part 31 includes a plurality of first convex parts 311 and a plurality of second convex parts 312 arranged in an array. The first convex parts 311 are located at a side of the second convex parts 312 adjacent to the heat conductive part 32. The first convex parts 311 have a shape of a long strip, and the first convex parts 311 are formed by the base support part 31 extending towards a direction close to the heat conductive part 32. An orthographic projection of each of the second convex parts 312 on the base support part 31 has a shape of a circle, an oval, or a rectangle. Specifically, the orthographic projection of each of the second convex parts 312 on the base support part 31 has a shape of the circle.

It should be noted that in this embodiment, the base support part 31 includes the plurality of first convex parts 311 and the plurality of second convex parts 312 arranged in the array. The first convex parts 311 have a shape of the long strip, and the orthographic projection of each of the second convex parts 312 on the base support part 31 has a shape of the circle. When the electrode assemblies 21 and the vapor chamber 30B are disposed on the base support part 31, the first convex parts 311 and the second convex parts 312 can play a certain supporting role, and gaps between the first convex parts 311 and the second convex parts 312 can play a certain cushioning effect, which cancels a downward pressure of the electrode assemblies 21 and the vapor chamber 30B on the base support part 31, thereby improving a bearing capacity of the heat conductive member 30A and improving the compressive performance of the heat conductive member 30A.

It should be noted that a liquid medium in the heat conductive part 32 adheres to the capillary structure 321A1 under a suction force of the wick 321A, and the capillary structure 321A1 can directionally conduct the heat conductive material. During the charging and discharging processes of the battery 1, the liquid medium absorbs the heat generated between the two adjacent electrode assemblies 21 and becomes a gaseous medium. The gaseous medium moves from the heat conductive part 32 toward a direction close to the base support part 31 through the heat dissipation channel. The gaseous medium releases heat energy and recondenses to be the liquid medium to achieve the soaking effect on the electrode assemblies 21 when cooled. The liquid medium recondensed returns to the wick 321A1 under the action of the gross suction of the capillary structure 321A, thereby completing a cycle. This avoids the situation in the related art that a large amount of heat is accumulated between the two adjacent electrode assemblies 21, thus accelerating the heat dissipation rate of the electrode assemblies 21, prolonging the service life of the battery 1, and improving the safety performance of the battery 1.

It should be noted that in another embodiment, the heat conductive member 30 includes two heat conductive sub-members. Each of the two heat conductive sub-members is an L-shaped structure. Each of the heat conductive sub-members include a heat conductive part 32 and a base support part 31. One end of the heat conductive part 32 and one end of the base support part 31 are connected together. The heat conductive parts 32 of the two adjacent heat conductive sub-members are bonded together. In another embodiment, the heat conductive member 30 includes a heat conductive part 32 and a base support part 31. The heat conductive part 32 includes two heat conductive sub-parts. Each of the heat conductive sub-parts is an I-shaped structure. The two heat conductive sub-parts are connected to the base support part 31. The two heat conductive sub-parts are bonded together. The present embodiment does not specifically limit a shape of the heat conductive member 30.

In another embodiment of the present application, referring to FIG. 10 to FIG. 14, the heat conductive part 32 is provided with a plurality of first through holes 323 arranged at intervals in the first direction X. The plurality of first through holes 323 are communicated to the accommodating cavity 12. By providing the plurality of first through holes 323 on the heat conductive part 32, the electrolyte inside the accommodating cavity 12 can normally flow to the sidewalls of the electrode assemblies 21, thereby preventing a charge-discharge power of the battery 1 from decreasing due to the heat conductive part 32.

It should be noted that the heat conductive part 32 is configured to conduct the heat away from a bottom of the electrode assemblies 21 to a bottom of the housing 10, so that the heat can be dissipated through the cooling plate 2 outside the housing 10, thereby reducing a temperature difference between a top of the electrode assemblies 21 and other positions of the electrode assemblies 21, and prolonging the service life of the battery 1. Moreover, by providing the plurality of first through holes 323 on the heat conductive part 32, the electrolyte inside the accommodating cavity 12 can normally flow to the sidewalls of the electrode assemblies 21, thereby preventing the charge-discharge power of the battery 1 from decreasing due to the heat conductive part 32.

It should be noted that the heat conductive part 32 and the base support part 31 may be integrally formed to be an integrated structure by die-casting, injection molding, etc., or may be formed to be a split structure connected by screwing, welding, etc.

Generally, one end of the heat conductive part 32 is connected to one side edge of the base support part 31 or a middle of the base support part 31.

The heat conductive member 30 is generally made of metal or some materials with better thermal conductivity for better thermal conductivity. Moreover, the heat conductive member 30 is generally made of materials with high corrosion resistance and chemical stability to adapt to an electrolyte environment inside the accommodating cavity 12.

In order to allow the electrolyte inside the accommodating cavity 12 to flow normally without interfering with normal operations of the battery 1, the first through holes 323 on the heat conductive part 32 may extend to an edge of the heat conductive part 32 to form a groove structure on the heat conductive part 32, thereby increasing a flow rate of the electrolyte passing through the heat conductive part 32.

In some embodiments, the heat conductive part 32 extends from the top of the electrode assemblies 21 to the bottom of the electrode assemblies 21. That is, a length of the heat conductive part 32 is equal to a height of the electrode assemblies 21, so as to ensure that the heat from the top of the electrode assemblies 21 can be conducted to the base support part 31 at the bottom of the electrode assemblies 21 through the heat conductive part 32 provided on the sidewalls of the electrode assemblies 21, thereby reducing the temperature difference between the top and bottom of the electrode assemblies 21.

Certainly, in some embodiments, the heat conductive part 32 may also extend from the bottom of the electrode assemblies 21 to a middle of the electrode assemblies 21. That is, the heat conductive part 32 only covers part of a sidewall area of the electrode assemblies 21, thereby reducing the production cost of the battery 1.

In some embodiments, the heat conductive part 32 at least completely covers one of the sidewalls of the electrode assemblies 21.

It should be understood that the larger a contact area between the heat conductive part 32 and the electrode assemblies 21, the better the soaking effect. Therefore, the heat conductive part 32 at least completely covers one of the sidewalls of the electrode assemblies 21, so that the heat of the electrode assemblies 21 in a horizontal direction can be uniform, thereby reducing the temperature difference at each position of the electrode assemblies 21 in the horizontal direction.

Generally, each of the electrode assemblies 21 is a cuboid structure. The heat conductive part 32 is at least completely bonded with one of the sidewalls of the cuboid structure, or completely covers all the sidewalls of the cuboid structure.

Generally, each of the electrode assembly 21 may also be a cylinder. The heat conductive part 32 may completely wrap and cover the entire sidewalls of the cylinder, or may only cover the sidewalls within a certain radian range.

In one embodiment, the base support part 31 completely coincides with the bottom of the electrode assemblies 21. That is, the shape and size of the base support part 31 are exactly the same as the shape and size of the bottom of the electrode assemblies 21. In another embodiment, the size of the base support part 31 is much larger than the size of the bottom of the electrode assemblies 21. When the electrode assemblies 21 are disposed on the base support part 31, the base support part 31 can completely cover the bottom of the electrode assemblies 21. For example, the plurality of electrode assemblies 21 may be carried on the base support part 31.

Similarly, in some embodiments, in order to improve the flowability of the electrolyte at the bottom of the electrode assemblies 21, a plurality of second through holes 325 are provided on the base support part 31 to circulate the electrolyte.

In some embodiments, the plurality of the first through holes 323 on the heat conductive part 32 are arranged on the heat conductive part 32 in an array.

The array arrangement mentioned above may be a rectangular array arrangement or a ring array arrangement, which is not limited herein. A main purpose is that the plurality of the first through holes 323 can be uniformly distributed on the heat conductive part 32, so as to ensure that the sidewalls of the electrode assemblies 21 bonded to the heat conductive part 32 can uniformly contact the electrolyte.

In some embodiments, the first through holes 323 may be circular through holes, square through holes, etc.

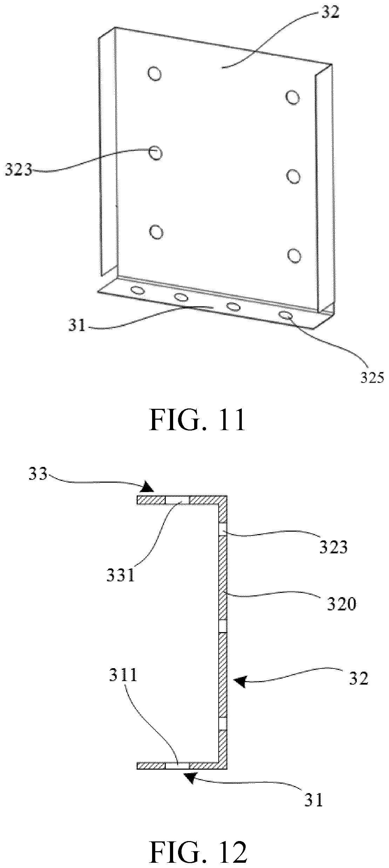

In some embodiments, referring to FIG. 12, the heat conductive member 30 further includes a first roof part 33. The first roof part 33 is bonded on the top of electrode assemblies 21 and connected to the heat conductive part 32. The first roof part 33 is disposed between the cover plate assembly 13 of the housing 10 and the top of the electrode assemblies 21.

It should be understood that a connecting way between the first roof part 33 and the heat conductive part 32 can be referred to a connecting way between the base support part 31 and the heat conductive part 32. The first roof part 33 and the base support part 31 are connected to both ends of the heat conductive part 32, respectively. One end of the heat conductive part 32 is connected to one side edge of the first roof part 33 or a middle of the first roof part 33.

Similarly, an arrangement way between the first roof part 33 and the electrode assemblies 21 is the same as an arrangement way between the base support part 31 and the electrode assemblies 21. That is, one first roof part 33 can correspond to one electrode assembly 21 or a plurality of electrode assemblies 21, and one first roof parts 33 may cover the top of one electrode assembly 21 or the plurality of electrode assemblies 21.

Moreover, when the first roof part 33 is bonded with the top of the electrode assemblies 21, and the top of the electrode assemblies 21 is completely covered by the first roof part 33.

In one embodiment, the first roof part 33 is further provided with a plurality of third through holes 331 to circulate the electrolyte.

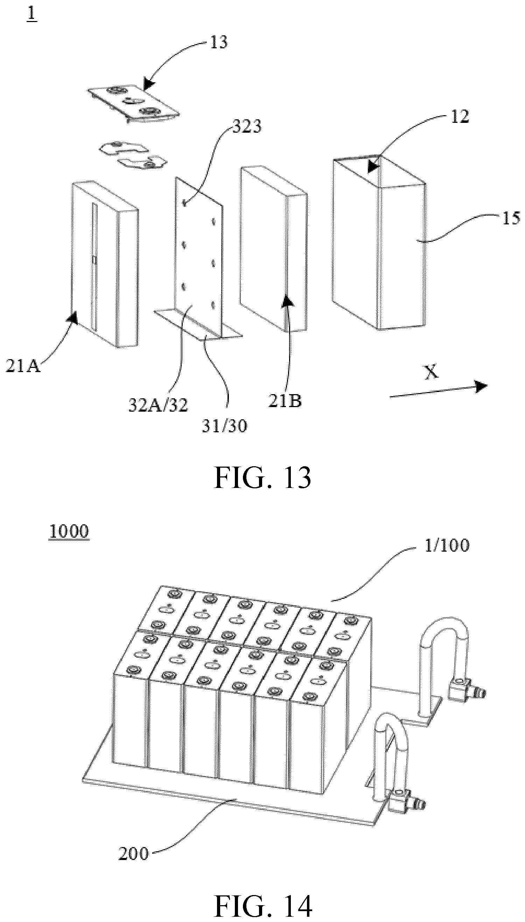

In one embodiment, referring to FIG. 13, the first heat conductive sub-part 32A is connected to the base support part 31 to form a " 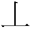 " -shaped structure, and the bottoms of two electrode assemblies 21 are located on the base support part 31.

In this embodiment, the first heat conductive sub-part 32A is the "_L" - shaped structure. Two side surfaces of the first heat conductive sub-part 32A are bonded with the two adjacent electrode assemblies 21, respectively. One end of the first heat conductive sub-part 32A is connected to the middle of the base support part 31, so that the base support part 31 is divided into two parts provided at the bottoms of the two electrode assemblies 21 respectively.

In one embodiment, the housing 10 includes a lower housing 15 and the cover plate assembly 13 covering the lower housing 15. The cover plate assembly 13 cooperates with the lower housing 15 to form the accommodating cavity 12. A bottom of the lower housing 15 includes the base plate 11.

The present application further provides a battery module 1000 including the battery 1 of any one of the embodiments mentioned-above. The battery module 1000 has characteristics such as the low production cost and easy assembly.

In one embodiment, referring to FIG. 14, the battery module 1000 includes a battery case body (not shown), a battery module 100, and a cooling plate 200. The battery module 100 includes a plurality of batteries 1 in an array. The battery module 100 is disposed inside the battery case body. The cooling plate 200 is disposed between a bottom of the battery module 100 and a bottom of the battery case body, so as to cool the battery module 100.

It should be understood that the batteries 1 have been described in detail in the embodiments mentioned above, which will not be described again herein.

In this embodiment, the batteries 1 can be applied to an electrical device in a plurality of fields such as automobiles, aircraft, mechanical production devices, etc. The batteries 1 are configured to provide electrical energy for the electrical device, which have a strong practicability.

The present embodiment provides an electrical device includes a battery module in any one of the embodiments mentioned above.

In this embodiment, the electrical device includes the batteries in any one of the embodiments mentioned above. The batteries are used as a power supply for the electrical device. The electrical device also has the advantages of the batteries, thereby helping to simplify an overall structure of the electrical device. The electrical device may be an automobile, an aircraft, a mechanical production device, etc.

In summary, a battery, a battery module, and an electrical device are provided by the embodiments of the present application. The battery includes a housing, a electrode assembly group, and a heat conductive member. The housing includes a base plate and an accommodating cavity. The electrode assembly group is disposed inside the accommodating cavity and includes a plurality of electrode assemblies arranged in a first direction. The heat conductive member is disposed inside the accommodating cavity. The heat conductive member includes a base support part and a heat conductive part connected together. The base support part is in thermally conductive contact with the base plate. At least part of the base support part is disposed between two adjacent electrode assemblies. The heat conductive part is in thermally conductive contact with sidewalls of the two adjacent electrode assemblies located at two opposite sides of the heat conductive part. During high-power charging and discharging processes of the battery, heat generated between the two adjacent electrode assemblies can be quickly conducted to the housing through the heat conductive member. This avoids a situation that a large amount of heat is accumulated between the two adjacent electrode assemblies, thus accelerating a heat dissipation rate of the electrode assemblies, prolonging a service life of the battery, and improving the safety performance of the battery.

In the above-described embodiments, the description of each embodiment has its own emphasis, and the parts not detailed in one embodiment can be referred to the relevant descriptions of other embodiments.

## Claims

1. A battery (1), **characterized in that** the battery (1) comprises:
a housing (10) comprising a base plate (11) and an accommodating cavity (12);
an electrode assembly group (20) disposed inside the accommodating cavity (12) and comprising a plurality of electrode assemblies (21) arranged in a first direction (X); and
a heat conductive member (30) disposed inside the accommodating cavity (12) and comprising a base support part (31) and a heat conductive part (32) connected together, wherein the base support part (31) is disposed between the housing (10) and the electrode assemblies (21), the base support part (31) is in thermally conductive contact with the housing (10), at least part of the heat conductive part (32) is located between two adjacent electrode assemblies (21), and the heat conductive part (32) is in thermally conductive contact with sidewalls of the two adjacent electrode assemblies (21) located at two opposite sides of the heat conductive part (32).

2. The battery (1) according to claim 1, **characterized in that** the heat conductive part (32) comprises a first heat conductive sub-part (32A) located between the two adjacent electrode assemblies (21), and the first heat conductive sub-part (32A) comprises a first side surface (32A1) and a second side surface (32A2) opposite to the first side surface (32A1); and
wherein for the two adjacent electrode assemblies (21) located at the two opposite sides of the first heat conductive sub-part (32A), the first side surface (32A1) is in thermally conductive contact with one sidewall of one of the two adjacent electrode assemblies (21), and the second side surface (32A2) is in thermally conductive contact with one sidewall of the other one of the two adjacent electrode assemblies (21).

3. The battery (1) according to claim 2, **characterized in that** in the first direction (X), an orthographic projection of the first heat conductive sub-part (32A) on a sidewall of the housing (10) covers an orthographic projection of the electrode assemblies (21) on the sidewall of the housing (10).

4. The battery (1) according to claim 1, **characterized in that** the heat conductive part (32) comprises a plurality of heat conductive sub-parts (320); and wherein in the first direction (X), two side surfaces of at least one of the heat conductive sub-parts (320) are in contact with the housing (10) and the electrode assemblies (21), respectively.

5. The battery (1) according to claim 4, **characterized in that** the heat conductive part (32) comprises a first heat conductive sub-part (32A) and a second heat conductive sub-part (32B) arranged at intervals in the first direction (X), the first heat conductive sub-part (32A) is located between the two adjacent electrode assemblies (21), and the second heat conductive sub-part (32B) is located between the electrode assemblies (21) and the housing (10); and
wherein the second heat conductive sub-parts (32B) comprises a third side surface (32B1) and a fourth side surface (32B2) opposite to the third side surface (32B1), the third side surface (32B 1) is in thermally conductive contact with one sidewall of one of the electrode assemblies (21), and the fourth side surface (32B2) is in thermally conductive contact with one sidewall of the housing (10).

6. The battery (1) according to claim 1, **characterized in that** at least part of the heat conductive member (30) is a vapor chamber (30B);
optionally, an outer surface of the vapor chamber (30B) is provided with an insulating film or a plating layer made of stainless steel.

7. The battery (1) according to claim 1, **characterized in that** the heat conductive part (32) comprises a first housing (321), a second housing (322), and a cavity (320A) surrounded by the first housing (321) and the second housing (322); and
wherein at least one of the first housing (321) and the second housing (322) is provided with a wick (321A), the cavity (320A) is provided with a heat conductive material; optionally, the wick (321A) is provided with a capillary structure (321A1) configured to directionally conduct the heat conductive material, and the wick (321A) is communicated to the cavity (320A) to conduct the heat conductive material.

8. The battery (1) according to claim 7, **characterized in that** the at least one of the first housing (321) and the second housing (322) is provided with a support structure (322A) abutting against the two adjacent electrode assemblies (21), the wick (321A) and the support structure (322A) are arranged at intervals in a second direction (Y), and the second direction (Y) is an extending direction of the heat conductive member (30); optionally, the support structure (322A) is provided with a plurality of protrusions (322A1) arranged at intervals.

9. The battery (1) according to any one of claims 1-8, **characterized in that** one side of the base support part (31) is in thermally conductive contact with the base plate (11), and an insulating layer (40) is provided between another side of the base support part (31) and a side of the electrode assembly group (20) adjacent to the base plate (11); and wherein an orthographic projection of the base support part (31) on the base plate (11) covers an orthographic projection of the electrode assembly group (20) on the base plate (11).

10. The battery (1) according to any one of claims 1-8, **characterized in that** the base support part (31) comprises a plurality of first convex parts (311) and a plurality of second convex parts (312), and the first convex parts (311) are located at a side of the second convex parts (312) adjacent to the heat conductive part (32); and
wherein the first convex parts (311) have a shape of a long strip, and an orthographic projection of each of the second convex parts (312) on the base support part (31) has a shape of a circle, an oval, or a rectangle.

11. The battery (1) according to claim 1, **characterized in that** one side of the base support part (31) is in thermally conductive contact with the base plate (11), and another side of the base support part (31) is in thermally conductive contact with a side of the electrode assembly group (20) adjacent to the base plate (11); an orthographic projection of the base support part (31) on the base plate (11) covers an orthographic projection of the electrode assembly group (20) on the base plate (11);
optionally, the heat conductive member (30) is an insulating heat conductive member (30A) integrally formed;
optionally, the insulating heat conductive member (30A) is made of biphenyl tetracarboxylic diandhydride, diphenyl ether diamine, or m-phenylenediamine.

12. The battery (1) according to claim 1, **characterized in that** the heat conductive part (32) is provided with a plurality of first through holes (323) arranged at intervals and communicated to the accommodating cavity (12);
optionally, the base support part (31) is provided with a plurality of second through holes (325); and
optionally, the plurality of first through holes (323) are arranged on the heat conductive part (32) in an array.

13. The battery (1) according to claim 12, **characterized in that** the heat conductive member (30) further comprises a first roof part (33) opposite to the base support part (31) and connected to the heat conductive part (32), and the first roof part (33) is in thermally conductive contact with a side of the electrode assemblies (21) away from the base support part (31).

14. A battery module (1000), **characterized in that** the battery module (1000) comprises the battery (1) according to any one of claims 1-13;
a battery case body;
a battery assembly (100) comprising a plurality of batteries arranged in an array and inside the battery case body; and
a cooling plate (200) disposed between a bottom of the battery module (100) and a bottom of the battery case body;
wherein the bottom of the battery module (100) is configured to be a side surface of a base support part (31) of the batteries (1) away from an electrode assembly group (20) of the batteries (1).

15. An electrical device, **characterized in that** the electrical device comprises the battery module (100) according to claim 14.
